# EUROPEAN PATENT APPLICATION

(11) **EP 2 949 545 A1**
(43) Date of publication of application: **02.12.2015**
(21) Application number: 13872729.2
(22) Date of filing: 24.01.2013
(51) Int. Cl.: B62D 5/04

(54) **ELECTRIC POWER STEERING DEVICE**

(71) Applicant: TOYOTA JIDOSHA KABUSHIKI KAISHA, Toyota-shi, Aichi-ken, 471-8571 (JP)
(72) Inventor: URABABA Shingo, Toyota-shi Aichi 471-8571 (JP); TOYODA Hiroyuki, Toyota-shi Aichi 471-8571 (JP); MATSUNO Takayuki, Toyota-shi Aichi 471-8571 (JP)
(74) Representative: Winter, Brandl, Fürniss, Hübner, Röss, Kaiser, Polte - Partnerschaft mbB
(86) International application number: PCT/JP2013/051452
(87) International publication number: WO 2014/115281

(57) **Abstract**

An electric power-steering device 100 comprises a steering mechanism 10, an electric motor 20 which outputs an assist force to this steering mechanism 10, a transmission mechanism 30 which comprises toothed pulleys 31, 32 and a toothed belt 33 and transmits the output power of the electric motor 20 to the steering mechanism 10, and a torque limiter 40 which sets a limit on the extent of the torque transmitted between the electric motor 20 and an output member (11) of the steering mechanism 10. In this electric power-steering device 100, a variation lower limit of a teeth jump torque at which a teeth jump occurs between the toothed pulleys 31, 32 and the toothed belt 33 is set at a value larger than a variation upper limit of a limit torque in the torque limiter 40. Therefore, when a torque which exceeds a normal torque occurs at a motive-power transmission system between the electric motor 20 and the steering mechanism 10, the torque limiter 40 functions (acts) before a teeth jump occurs in the transmission mechanism 30.

## Description

### [Technical Field]

The present invention relates to an electric power-steering device, especially an electric power-steering device comprising a steering mechanism, an electric motor which outputs an assist force to this steering mechanism, a transmission mechanism which comprises a toothed pulley and a toothed belt and transmits the output power of said electric motor to said steering mechanism, and a torque limiter which sets a limit on the extent of the torque transmitted between said electric motor and an output member (for instance, a rack shaft) of said steering mechanism.

### [Background Art]

This kind of an electric power-steering device is shown in the following patent document 1 (PTL1), for example. In the electric power-steering device described in the following patent document 1 (PTL1), consideration for a teeth jump (a phenomenon in which a tooth of a toothed belt oversteps a tooth of a toothed pulley) generated between the toothed pulley and the toothed belt in a transmission mechanism is insufficient.

### [Citation List]

### [Patent Literature]

[PTL1] Japanese Patent Application Laid-Open (kokai) No. 2004-50884

### [Summary of Invention]

In the electric power-steering device described in the above-mentioned patent document 1 (PTL1), in the case where a teeth jump torque (torque at which a teeth jump occurs between a toothed pulley and a toothed belt and which is set up for a transmission mechanism) is set up smaller than a limit torque (maximum torque which can be transmitted by the transmission mechanism and is set up in the torque limiter), when a torque which exceeds a normal torque occurs at a motive-power transmission system between an electric motor and an output-power member of a steering mechanism, a teeth jump may occur in a transmission mechanism and a torque limiter may not function (act). In this case, while there is a possibility that a loud sound may occur due to the teeth jump in the transmission mechanism, there is a possibility that a teeth chip may occur in the transmission mechanism. In addition, an occurrence of a sound resulting from a teeth jump has a possibility of giving a user an uneasy feeling. Moreover, a teeth chip in a transmission mechanism has a possibility that a piece of the teeth chip may penetrate into between a toothed pulley and a toothed belt to reduce the endurance of the transmission mechanism.

The present invention has been made for solving the above-mentioned subjects, and is an electric power-steering device comprising a steering mechanism, an electric motor which outputs an assist force to this steering mechanism, a transmission mechanism which comprises a toothed pulley and a toothed belt and transmits the output power of said electric motor to said steering mechanism, and a torque limiter which sets a limit on the extent of the torque transmitted between said electric motor and an output member of said steering mechanism, wherein: a variation lower limit of a teeth jump torque at which a teeth jump occurs between said toothed pulley and said toothed belt is set at a value larger than a variation upper limit of a limit torque in said torque limiter.

In an electric power-steering device according to the present invention, a variation lower limit of a teeth jump torque at which a teeth jump occurs between said toothed pulley and said toothed belt is set at a value larger than a variation upper limit of a limit torque in said torque limiter. Therefore, when a torque which exceeds a normal torque occurs at a motive-power transmission system between the electric motor and the steering mechanism, the torque limiter functions (acts) before a teeth jump occurs in the transmission mechanism. Accordingly, a teeth jump in the transmission mechanism is prevented and an occurrence of sound and an occurrence of a teeth chip resulting from a teeth jump are prevented.

When carrying out the above-mentioned present invention, a variation upper limit of the teeth jump torque at which a teeth jump occurs between said toothed pulley and said toothed belt may be set at a value smaller than a variation lower limit of a torque corresponding to an external input which produces a breakage at the weakest portion of said steering mechanism. In this case, when an excessive external force is inputted into the steering mechanism, an excessive torque transmission is suppressed by the function (action) of the torque limiter or a teeth jump between the toothed pulley and the toothed belt (when the torque limiter does not function), and a breakage of the steering mechanism is prevented.

### [Brief Description of Drawings]

FIG. 1 is a partial vertical section front elevation view schematically showing one embodiment of an electric power-steering device according to the present invention.
FIG. 2 includes a graph showing a relation between variation of torques (limit torque and teeth jump torque) converted into a rack shaft axial force and variation of a breaking strength and a graph showing a frequency distribution of axial force generation (axial force generated by a steering input, axial force generated by a road surface input, and an axial force generated by steering up to an end stopper, etc.) converted into a rack shaft axial force.
FIG. 3 is a partial vertical section front elevation view schematically showing another embodiment of an electric power-steering device according to the present invention.

### [Description of Embodiments]

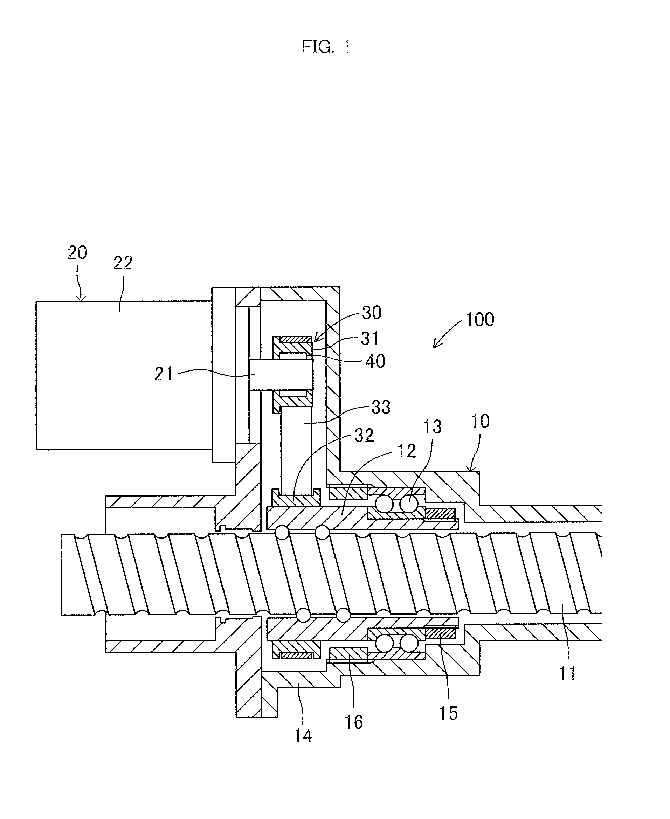

Hereinafter, an embodiment of the present invention will be explained based on a drawing. FIG. 1 is a drawing for showing schematically one embodiment of an electric power-steering device according to the present invention. In this electric power-steering device 100, a rotation axis 21 of an electric motor 20 is arranged parallel to a rack shaft 11 (ball screw axis) which is arranged in a vehicle width direction. The electric power-steering device 100 comprises a rack-type steering mechanism 10 and an electric motor 20, and is configured to transmit a rotational force of a driving pulley 31, which is combined concentrically with the rotation axis 21 of the electric motor 20, in a torque-transmittable way (rotational force of the electric motor 20) through the toothed belt 33 to a driven pulley 32 combined concentrically with a ball nut 12, which is a rotation member of the steering mechanism 10, in a torque-transmittable way and thereby assist a steering.

The rack-type steering mechanism 10 is well-known itself, in which a rack shaft 11 connected with a steering wheel (not shown) through a pinion shaft (not shown) and a steering shaft (not shown), etc. is supported by a steering housing 14 mounted to a vehicle body (not shown) in a movable way in a vehicle width direction. Moreover, in this steering mechanism 10, a ball nut 12 is rotatably mounted to the steering housing 14 through a bearing 13. Moreover, the ball nut 12 and the bearing 13 are positioned and fixed by a fixing nut 15 mounted with the ball nut 12 and a fixing nut 16 mounted on the steering housing 14.

In addition, this steering mechanism 10 is configured so that a steering input applied to a steering wheel is transmitted to the rack shaft 11, through a steering shaft and/or a pinion shaft, etc. as well-known. Moreover, it is configured so that an input from a road surface (road surface input) is transmitted to the rack shaft 11, through a wheel, a knuckle arm and a tie rod (not shown), etc. as well-known. Moreover, the rack shaft 11 is constituted so that movement in a vehicle width direction is specified by end stoppers (not shown).

The electric motor 20 is configured to be driven according to a steering torque transmitted to a steering shaft from a steering wheel. Therefore, a rotation of the rotation axis 21 is transmitted to the ball nut 12 through the driving pulley 31, the belt 33, and the driven pulley 32 and made into an axial direction driving force (assist force) of the rack shaft 11, and thereby a steering assistance is performed. The rotation axis 21 is rotatably attached to a motor housing 22 of the electric motor 20 through a bearing (not shown). The motor housing 22 is integrally attached to the steering housing 14.

The driving pulley 31 constitutes the transmission mechanism 30 which transmits the output power of the electric motor 20 to the ball nut 12 of the steering mechanism 10, along with the driven pulley 32 and the toothed belt 33, etc. Moreover, the driving pulley 31 is attached through the torque limiter 40 to the rotation axis 21 of the electric motor 20. The driven pulley 32 is a toothed pulley with a large diameter, and is attached to the outer periphery of the ball nut 12 in an integrally rotatable way. In addition, the teeth jump torque T2 at which a teeth jump occurs between each of the pulleys 31, 32 and the belt 33 of the transmission mechanism 30 can be changed by changing the tensile of the belt 33, for example.

The torque limiter 40 is a tolerance ring (provided by Rencol Tolerance Ring Japan, Inc.), and sets a limit on the extent of the torque transmitted between the electric motor 20 and the rack shaft 11 (output member) of the steering mechanism 10, for example. In addition, the limit torque T1 (maximum torque which can be transmitted) of the torque limiter 40 can be changed by changing the specification of the tolerance ring, for example.

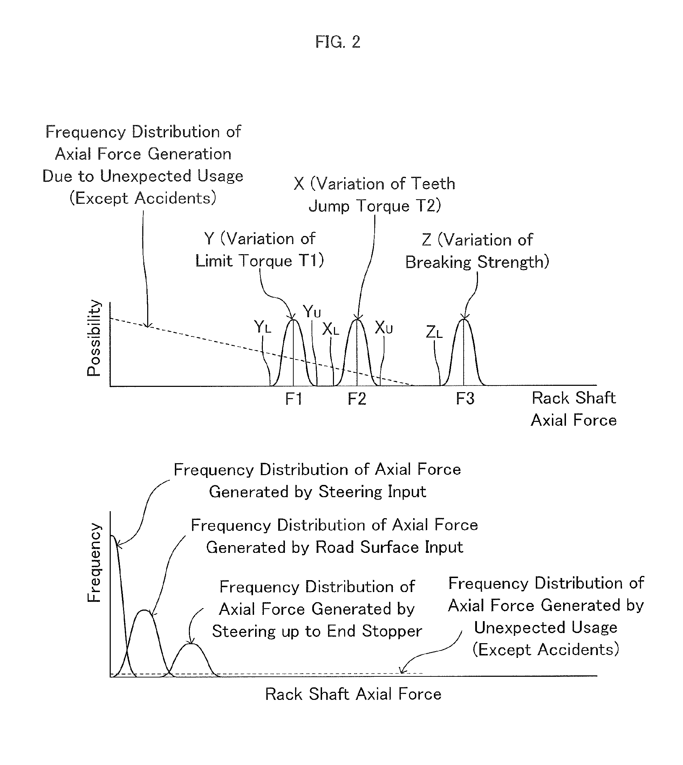

By the way, in this embodiment, as shown in Fig. 2, F2 is a value which is converted from the teeth jump torque T2 at which a teeth jump occurs between each of the pulleys 31, 32 and the belt 33 of the transmission mechanism 30 into the rack shaft axial force F2 (force of the rack shaft 11 in the axial direction), and the variation X of the value converted from the teeth jump torque T2 into the rack shaft axial force is as shown in Fig. 2. Moreover, F1 is a value which is converted from the limit torque T1 in the torque limiter 40 into the rack shaft axial force, and the variation Y of the value converted from the limit torque T1 into the rack shaft axial force is as shown in Fig. 2. Namely, in this embodiment, the lower limit X_{L} of the variation X of the value converted from the teeth jump torque T2 into the rack shaft axial force is set up to be larger than the upper limit Y_{U} of the variation Y of the value converted from the limit torque T1 in the torque limiter 40 into the rack shaft axial force. In addition, the lower limit Y_{L} of the variation Y of the value converted from the limit torque T1 in the torque limiter 40 into the rack shaft axial force is set up to be larger as compared with each axial force generation (axial force generated by a steering input, axial force generated by a road surface input, and axial force generated by steering up to an end stopper, etc.) converted into the rack shaft axial force, and it is constituted so that there may be no trouble in a usual steering operation.

Moreover, in this embodiment, the variation Z of a value F3 which is a value converted from a torque corresponding to an external input which produces a breakage at the weakest portion of the steering mechanism 10 (rotational force of the ball nut 12) into the rack shaft axial force is as shown in Fig. 2. Namely, in this embodiment, the upper limit X_{U} of the variation X of the value converted from the teeth jump torque T2 into the rack shaft axial force is set up to be smaller than the lower limit Z_{L} of the above-mentioned variation Z. In addition, each of the above-mentioned variations X, Y and Z can be obtained by various experiments and analyses.

Therefore, in this embodiment, when a torque which exceeds a normal torque occurs at the motive-power transfer system between the electric motor 20 and the rack shaft 11 (output-power member) of the steering mechanism 10, before a teeth jump occurs in the transmission mechanism 30, the torque limiter 40 functions (acts). Accordingly, the teeth jump in the transmission mechanism 30 is prevented, and the generation of sound and the occurrence of a teeth chip resulting from a teeth jump are prevented.

Moreover, in this embodiment, when an excessive external force (force from a wheel) inputs into the steering mechanism 10, an excessive torque transmission is suppressed by the function (action) of the torque limiter 40 or the teeth jump between each of the pulleys 31, 32 and the belt 33 (when the torque limiter 40 does not function), and thereby a breakage of the steering mechanism 10 is prevented.

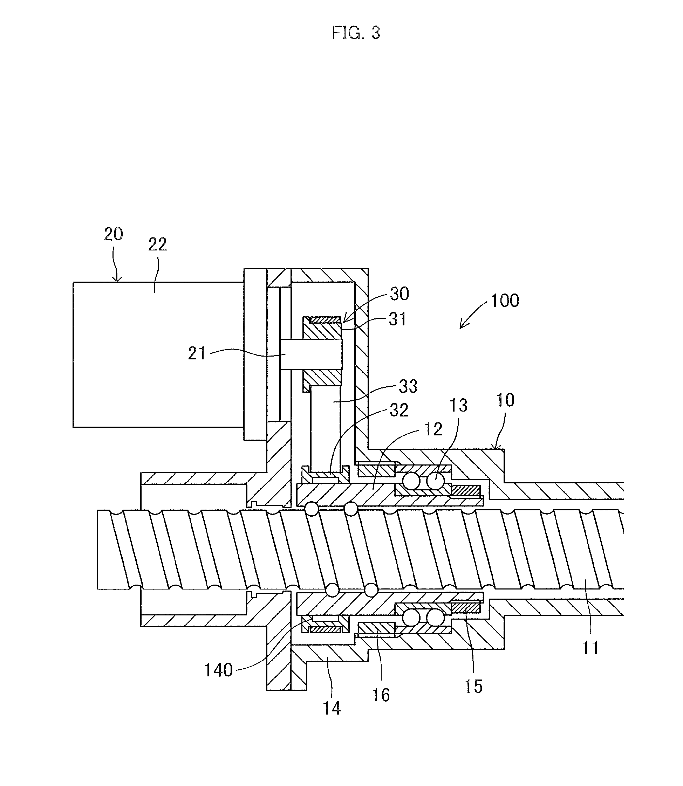

Although the torque limiter 40 is interposed between the rotation axis 21 of the electric motor 20 and the driving pulley 31 in the configuration according to the above-mentioned embodiment, when carrying out the present invention, it is also possible to interpose the torque limiter 140 between the driven pulley 32 and the ball nut 12, as shown in Fig. 3. In addition, when carrying out the present invention, the interposition location (disposition location) of a torque limiter may be any location as long as it is in a motive-power transfer system between an electric motor and an output-power member (rack shaft 11) of a steering mechanism, and is not limited to each embodiment described above.

Moreover, although the present invention is applied to the electric power-steering device 100 in which the electric motor 20 is arranged in parallel with the rack shaft 11 arranged in a vehicle width direction in the above-mentioned embodiment, the present invention can be applied not only to such an embodiment, but also to various electric power-steering devices (for instance, electric power-steering device in which the electric motor is arranged in parallel to the steering shaft arranged in a vehicle front-back direction), similarly or with suitable modification.

## Claims

1. An electric power-steering device comprising a steering mechanism, an electric motor which outputs an assist force to this steering mechanism, a transmission mechanism which comprises a toothed pulley and a toothed belt and transmits the output power of said electric motor to said steering mechanism, and a torque limiter which sets a limit on the extent of the torque transmitted between said electric motor and an output member of said steering mechanism, wherein:
a variation lower limit of a teeth jump torque at which a teeth jump occurs between said toothed pulley and said toothed belt is set at a value larger than a variation upper limit of a limit torque in said torque limiter.

2. The electric power-steering device according to Claim 1, wherein:
a variation upper limit of the teeth jump torque at which a teeth jump occurs between said toothed pulley and said toothed belt is set at a value smaller than a variation lower limit of a torque corresponding to an external input which produces a breakage at the weakest portion of said steering mechanism.
